Europäisches Patentamt

European Patent Office

Office européen des brevets

(19)

(11) Numéro de publication : **0 287 427 B1**

(12)                    **FASCICULE DE BREVET EUROPEEN**

(45) Date de publication du fascicule du brevet :
24.07.91 Bulletin 91/30

(51) Int. Cl.⁵ : **B29C 67/14, B29C 47/02**

(21) Numéro de dépôt : **88400811.1**

(22) Date de dépôt : **05.04.88**

(54) **Procédé de fabrication de profilés de résine thermoplastique renforcés de fibres continues, appareillage pour leur obtention.**

(30) Priorité : 09.04.87 FR 8704996

(43) Date de publication de la demande :
19.10.88 Bulletin 88/42

(45) Mention de la délivrance du brevet :
24.07.91 Bulletin 91/30

(84) Etats contractants désignés :
AT BE CH DE FR GB IT LI LU NL SE

(56) Documents cités :
EP-A- 0 167 303
FR-A- 2 130 462
FR-A- 2 181 998
FR-A- 2 459 119
FR-A- 2 504 449
US-A- 3 993 726
US-A- 4 312 917

(73) Titulaire : ATOCHEM
4 & 8, Cours Michelet La Défense 10
F-92800 Puteaux (FR)

(72) Inventeur : Glemet, Michel
Rue Max Carpentier
F-27470 Serquigny (FR)
Inventeur : Cognet, Gilles
128, Les Violettes Rue Ronsard
F-27300 Bernay (FR)

(74) Mandataire : Foiret, Claude et al
ATOCHEM Département Propriété Industrielle
F-92091 Paris la Défense 10 Cédex 42 (FR)

## Description

La présente invention concerne un procédé de fabrication de profilés de résine thermoplastique renforcés de fibres continues ainsi que l'appareillage permettant de les obtenir selon les préambules des revendications 1 et 5. Le procédé consiste à imprégner dans une filière d'enrobage à alimentation en tête d'équerre des rovings dont les fibres constitutives sont disposées préalablement à la filière d'enrobage sous forme de nappe, puis, afin d'assurer une imprégnation aussi complète que possible de chacune des fibres des rovings, à faire passer l'ensemble dans une zone d'embarrage préalablement à la filière de conformation du produit final. La filière d'enrobage est alimentée de façon classique par au moins une extrudeuse.

Il est connu, par exemple du brevet des Etats-Unis d'Amérique 3.834.980 de gainer de résine thermoplastique des rovings. Selon les techniques habituelles de gainage on fait traverser aux rovings le corps central chauffé d'une filière, le gainage s'effectuant au moyen d'une alimentation en résine thermoplastique fondue à partir du système connu en tête d'équerre. Un roving est constitué de la réunion de plusieurs fibres élémentaires continues.

Dans les techniques connues de gainage pour la fabrication des profilés renforcés de fibres continues, on associe généralement sous forme de fuseau plusieurs rovings. Dans ces conditions on rencontre deux difficultés majeures qui ne sont pas résolues. La première réside dans la difficulté d'imprégner à coeur les fuseaux et de répartir de façon homogène la résine thermoplastique autour de chacune des fibres élémentaires. La seconde, conséquence de la première, est de rencontrer dans le produit fini de l'air emprisonné entre les fibres ce qui est source de défauts dans les propriétés mécaniques.

Le brevet des Etats-Unis d'Amérique 4.312.917 décrit, comme le précédent, l'enrobage individuel de rovings dans une filière remplie de matière plastique en fusion. Outre les inconvénients précédemment cités, cette technique en apporte un supplémentaire en ce que les rovings amenés de l'extérieur sont introduits dans la filière les uns à la suite des autres et sensiblement perpendiculairement à l'axe de la filière ce qui crée de nouvelles tensions de rupture et un enchevêtrement des fibres à partir de la seconde chicane, surtout que les rovings froids entrainent une gélification brutale à leur surface de la résine fondue.

Dans le brevet des Etats-Unis d'Amérique 3.993.726 ayant servi de base pour les préambules des revendications 1 et 5, il est possible d'imprégner un roving pris isolément en plaçant dans la filière d'imprégnation deux séries de chicanes disposées sensiblement perpendiculairement l'une par rapport à l'autre. De cette façon le roving est épanoui et imprégné dans un sens puis écrasé en sens inverse dans la deuxième série de chicane. Ce dispositif présente un double inconvénient. Le premier est de ne permettre que l'imprégnation de roving isolé ; du fait de la disposition des chicanes, il n'est pas possible d'imprégner les fibres individuelles sous forme de nappe, une nappe ne pouvant subir une rotation d'environ 90° dans la filière remplie de matière plastique sans que les fibres se rassemblent en amas. Le deuxième inconvénient se trouve dans la situation des chicanes dans l'appareillage ; toutes les chicanes sont disposées dans la filière, ce qui entraine le double écrasement du roving directement dans la matière plastique fondue, d'où une force de tirage importante des fibres en sortie de filière entrainant des cassures de fibres. Dans ces conditions la qualité de l'imprégnation des fibres n'est pas bonne, les caractéristiques obtenues en flexion sur le produit final sont faibles. Il en est de même de l'efficacité du renforcement caractérisé par le coefficient $\varepsilon$ qui ne dépasse pas 0,25.

Pour remédier à ces inconvénients on propose les caractéristiques des revendications indépendantes 1 et 5. D'autres avantages de l'invention sont décrits dans les caractéristiques des revendications dépendantes.

Le procédé selon l'invention consiste préalablement au passage des rovings dans la filière d'enrobage des fibres, plutôt que de les introduire sous forme de fuseau, d'épanouir chaque roving de façon à étaler sensiblement côte à côte chacune des fibres de roving. Les rovings se trouvent dans ce cas sous forme de nappe ou de ruban constitué d'une succession de fibres individuelles continues parallèles. Pour réaliser cet alignement des fibres en épanouissant le roving on introduit les rovings dans la filière d'enrobage alimentée en polymère thermoplastique fondu après les avoir fait passer dans au moins une chicane d'une première zone d'embarrage qui, forçant sur le roving, provoque l'étalement des fibres le constituant. La nappe ou ruban ainsi formée est ensuite imprégnée de résine thermoplastique et tirée, avant la filière de conformation, dans une nouvelle zone d'embarrage formé de chicanes sensiblement parallèles à celle ou celles de la première zone. Dans ce système, la nappe ou ruban imprégnée de résine thermoplastique fondue passe dans au moins deux chicanes opposées et parallèles l'une par rapport à l'autre. Dans ces conditions, l'ensemble de fibres imprégnées de résine thermoplastique est dans la première chicane écrasé sur une de ses faces forçant la résine à s'infiltrer à l'état fondu entre les fibres pour passer vers la face opposée. L'effet inverse se produit quand l'ensemble des fibres imprégnées entre en contact avec la chicane opposée. Ce système d'embarrage avant et après le gainage de la nappe ou du ruban permet de réaliser l'imprégnation individuelle des fibres, ce qui provoque une meilleure homogénéisation et répartition de la résine dans les fibres ainsi que l'élimination quasi-totale de l'air occlus dans les rovings.

La présente technique permet d'épanouir les fibres de tous les rovings dans la première zone d'embarrage en les alignant parallèlement pour former une nappe de fibres. Ces fibres alignées à l'état non imprégnées arrivent ainsi dans la filière d'enrobage pratiquement isolées les unes des autres ce qui permet déjà une bonne imprégnation individuelle des fibres sans risque de rupture avant le passage dans la seconde zone d'embarrage.

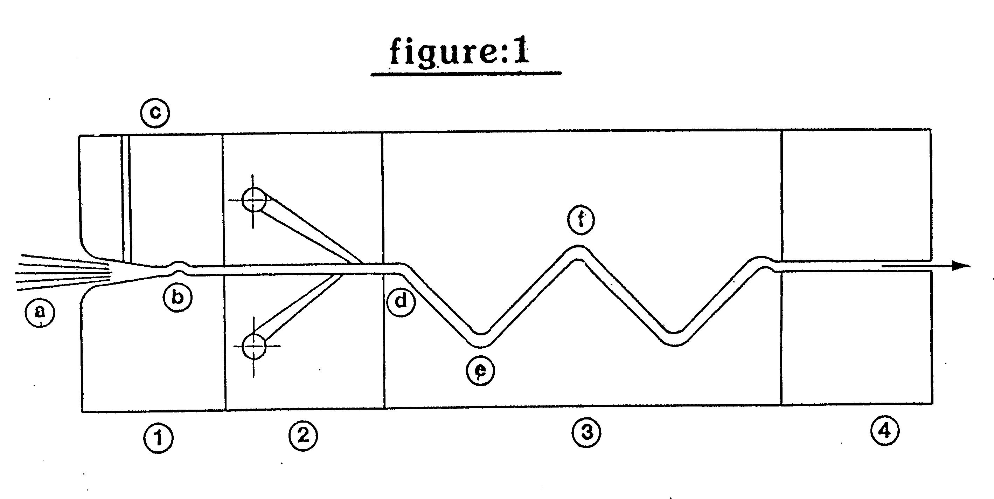

Les Figures annexées permettent de mieux illustrer l'invention. La Figure 1 illustre l'appareillage complet permettant la fabrication des profilés. Cet appareillage est constitué en 1 du système d'embarrage permettant l'étalement des fibres des rovings. En 2, suit la filière d'enrobage, reliée à une extrudeuse non représentée, avant le système d'embarrage 3 des fibres imprégnées. Finalement en 4, on trouve la filière de conformation.

En 1 est représenté le système d'embarrage constitué d'un canal dans lequel on tire les rovings "a". Ce canal de géométrie quelconque est de préférence de section rectangulaire de façon à faciliter la mise des rovings sous forme de nappe ou de ruban. L'entrée du canal peut être évasée de façon à permettre une meilleure introduction des rovings dans l'appareillage. Dans ce canal se trouve au moins une chicane "b" déviant le sens de tirage des rovings. Cette chicane est disposée sensiblement perpendiculairement à l'axe de tirage des rovings, et par conséquent du canal, de sorte que, lors de leur passage, ils butent sur ladite chicane ce qui entraine la mise à plat des fibres constituant chaque roving. Habituellement une seule chicane peut suffir, mais dans le cas où on souhaite réaliser une nappe à partir de nombreux rovings, il peut être souhaitable d'utiliser un système d'embarrage possédant plusieurs chicanes. Afin d'améliorer l'imprégnation ultérieure des fibres, il peut être utile de disposer d'une prise de vide "c" permettant d'éliminer le maximum d'air occlus dans les rovings. Un système de chauffage est également recommandé. La filière d'enrobage 2 est du type habituellement connu pour le recouvrement de fibres continues par un polymère à l'état fondu. Il s'agit d'une filière alimentée en tête d'équerre permettant d'enrober les fibres de matière thermoplastique fondue.

La partie 3 de l'appareillage formant le second système d'embarrage, habituellement chauffé à une température au moins égale à celle de fusion de la résine thermoplastique, est constituée essentiellement d'un canal "d" recevant dans l'alignement de la filière d'enrobage les fibres enrobées de résine thermoplastique fondue. Ce canal comporte au moins deux chicanes "e" et "f" disposées sensiblement perpendiculairement à son axe ou encore à l'axe de tirage des fibres enrobées et en opposition l'une par rapport à l'autre de façon telle qu'au tirage chacune des faces de l'enrobage soit alternativement forcée. Ces chicanes, comme déjà précisé, sont sensiblement parallèles à la chicane "b". Finalement les fibres imprégnées sont refroidies en sortie d'appareillage après leur passage dans la filière de conformation 4. Cette filière de conformation habituelle à tout système d'extrusion permet de donner l'aspect final du produit à obtenir. Selon les techniques connues il est possible compte tenu de la géométrie de la filière d'obtenir des profilés sophistiqués ou tout simplement des joncs que l'on découpe pour former des granulés transformables ultérieurement par toute autre technique de mise en oeuvre.

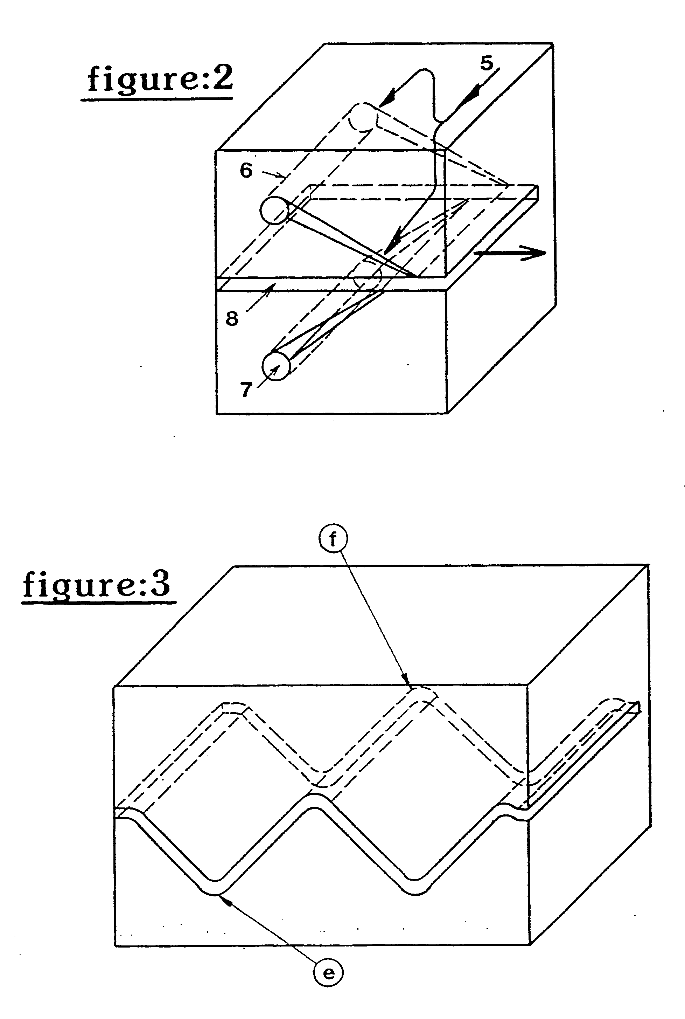

La Figure 2 montre une coupe en profil de la partie 2 de la Figure 1 relative à la filière d'enrobage. Cette Figure illustre un type de filière connue permettant d'enrober les fibres de rovings disposées en nappe. Une extrudeuse 5, non représentée, alimente en résine thermoplastique fondue par l'intermédiaire des canaux d'alimentation 6 et 7 le canal 8, représenté de section rectangulaire, dans lequel est tirée la nappe de fibres. La disposition des canaux d'alimentation 6 et 7 est telle qu'elle permet la distribution en résine thermoplastique fondue sur au moins les deux faces opposées les plus larges de la nappe de fibres.

La Figure 3 montre une coupe en profil d'une partie 3 utilisable formant le second système d'embarrage. Selon cette figure, particulièrement adaptée à l'invention, les chicanes résultent de la forme même du canal qui serpente sinusoïdalement entre la sortie de la filière d'enrobage et la filière de conformation. Selon ce système, il s'agit d'un bloc métallique, de préférence chauffé traversé d'un canal en forme de serpentin sinusoïdal possédant au moins deux chicanes parallèles en opposition représentées par une crête haute "f" et une crête basse "e" de la sinusoïde.

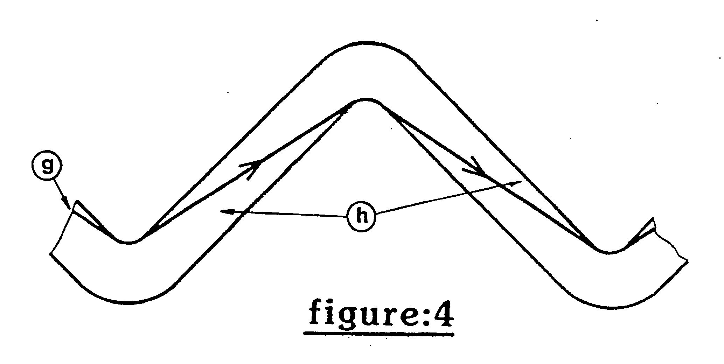

La Figure 4 permet de comprendre comment, dans un système d'embarrage selon la Figure 3, les fibres alignées "g" des rovings, venant buter sur les crêtes de la sinusoïde, forcent la résine thermoplastique fondue "h" à passer entre elles et par conséquent à améliorer leur enrobage.

Le procédé selon l'invention permet la fabrication de profilés renforcés de fibres continues à partir de tout polymère ou copolymère thermoplastique extrudable dont parmi les plus courants on peut citer : les polyoléfines, comme le polyéthylène ou polypropylène, les polymères vinylaromatiques et leurs copolymères comme le polystyrène et le copolymère acrylonitrile-butadiène-styrène, les polymères vinyliques halogénés comme le polychlorure de vinyle et le polyfluorure de vinylidène, les polyamides comme les polyamides 6, 11, 12, 6-6, 6-10, les polyesters comme le polyéthylène téréphtalate, le polybutylène téréphtalate, le copolymère séquencé poly(éther-amide), le polysulfone, le polyéthersulfone, le polycarbonate, le polyétheréther cétone, le polyphénylène sulfure, le polyétherimide, le polyphénylène oxyde, le polyphénylène éther ou encore leurs mélanges.

Les polymères thermoplastiques extrudables sont renforcés de fibres continues minérales ou organiques.

A titre d'exemple on peut citer les rovings de fibres de verre, de silice, de carbone ou encore d'aramide.

Les profilés renforcés obtenus peuvent être utilisés tels quels selon la forme de la filière. Ils peuvent également servir comme produits intermédiaires, après compoundage ou mise sous forme de granulés, en injection, compression, injection-compression, extrusion et autres.

Les exemples suivants illustrent l'invention sans toutefois la limiter.

## EXEMPLE 1

On utilise un appareillage selon la Figure 1 avec les précisions suivantes :
— zone 1 d'embarrage :
- longueur : 60 mm
- largeur : 100 mm
- entrefer : 3 mm
- entrée évasée et une chicane au dôme de 10 mm de hauteur
— zone 2 de filière d'alimentation
- longueur : 90 mm
- largeur : 100 mm
- deux canaux d'alimentation de 10 mm de diamètre
- entrefer en sortie de zone : 3 mm
- alimentation : extrudeuse de diamètre 30 mm
- longueur de vis : 22 D
— zone 3 d'embarrage
- longueur : 200 mm
- largeur : 100 mm
- embarrage sinusoïdal à 3 crêtes
- amplitude inter-crêtes : 40 mm
- entrefer : 3 mm
— zone 4 de conformation
- filière à 5 trous de 3 mm de diamètre
- longueur : 100 mm
- largeur : 100 mm

Dans cet appareillage on fabrique des joncs de polyamide 11 chargé à 50 % en masse de fibres de verre E, Roving 2400 tex.

La vitesse de tirage est de : 3 mètres par minute.

La température de chacune des zones est de :

zone 1 : 200°C
zone 2 : 230°C
zone 3 : 230°C
zone 4 : 210°C

## EXAMPLE 2

Dans l'appareillage de l'Exemple 1, à l'exception de la zone 4 de conformation qui possède les caractéristiques suivantes, suivie d'un conformateur refroidi :

Section rectangulaire d'entrée 100 mm de large sur 3 mm d'épaisseur

Section rectangulaire de sortie 10 mm de large sur 3,5 mm d'épaisseur

Longueur 100 mm on fabrique un barreau de 10 mm de large sur 3,5 mm d'épaisseur formé de polyamide 6 chargé à 39,3 % en volume de fibres de verre E Roving 2400 tex.

La vitesse de tirage est de : 3 mètres par minute

La température de chacune des zones est de :

zone 1 : 220°C
zone 2 : 280°C
zone 3 : 280°C
zone 4 : 260°C

Le module de flexion obtenu sur le barreau est de 24500 MPa.

4

Le coefficient ε = 0,85

Le coefficient ε est obtenu à partir de la loi des mélanges :

$$E = \varepsilon\, Ef\, Vf + Em\, (1 - Vf)$$

dans laquelle    Ef = module de Young de la fibre

Em = module de Young de la matrice

Vf = fraction volumique des fibres

E = valeur expérimentale du module de flexion.

## EXEMPLE 3

Dans l'appareillage de l'exemple 1 on fabrique des joncs de polyamide 12 chargé à 40% en masse de fibres de verre E, Roving 2400 tex.

La vitesse de tirage est de : 3 mètres par minute.

La température de chacune des zones est de :

zone 1 :    220°C

zone 2 :    260°C

zone 3 :    260°C

zone 4 :    240°C

## EXEMPLE 4

Dans l'appareillage de l'exemple 2 on fabrique des barreaux de polypropylène contenant 3% de propylène greffé anhydride maléique chargé à 28% en volume de fibres de verre E, Roving 2400 tex.

La vitesse de tirage est de : 3 mètres par minute.

La température de chacune des zones est de :

zone 1 :    240°C

zone 2 :    260°C

zone 3 :    260°C

zone 4 :    240°C

Le module de flexion obtenu est de 15400 MPa

Le coefficient ε = 0,78

## EXEMPLE 5

Dans l'appareillage de l'exemple 1, mais en remplaçant en zone 4 la filière à 5 trous par une filière à sortie unique de longueur 200 mm, de largeur de sortie de filière 100 mm et d'entrefer 0,7 mm, on fabrique une nappe de polyamide 6 chargé à 40% en masse de fibres de verre E, Roving 2400 tex.

La vitesse de tirage est de : 1 mètre par minute.

La température de chacune des zones est de :

zone 1 :    220°C

zone 2 :    280°C

zone 3 :    280°C

zone 4 :    275°C

## Revendications

1. Procédé de fabrication de profilés de résine thermoplastique renforcés de fibres continues par enrobage de résine thermoplastique de fibres continues de rovings dans une filière d'enrobage possédant une zone d'embarrage constituée d'au moins deux chicanes opposées et parallèles l'une par rapport à l'autre forçant la résine à s'infiltrer entre les fibres, caractérisé en ce que préalablement à leur enrobage les fibres des rovings sont épanouies en nappe de fibres alignées parallèlement par passage dans au moins une chicane d'une première zone d'embarrage.

2. Procédé selon la revendication 1 caractérisé en ce que les chicanes des deux zones d'embarrage sont parallèles.

3. Procédé selon l'une des revendications 1 ou 2 caractérisé en ce que les chicanes sont sensiblement perpendiculaires à l'axe de circulation des fibres continues dans l'appareillage.

4. Procédé selon l'une des revendications 1 à 3 caractérisé en ce que la première zone d'embarrage est chauffée.

5. Appareillage permettant de fabriquer des profilés de résine thermoplastique renforcés de fibres continues constitué essentiellement d'une filière d'enrobage des fibres continues et d'une filière de conformation entre lesquelles se trouve un système d'embarrage formé d'un canal, situé dans l'alignement de sortie de la filière d'enrobage possedant au moins deux chicanes opposées et parallèles l'une par rapport à l'autre, et, sensiblement perpendiculaires à l'axe dudit canal caractérisé en ce que préalablement à la filière d'enrobage se trouve un premier système d'embarrage formé d'un canal possédant au moins une chicane sensiblement perpendiculaire à l'axe de ce dernier canal.

6. Appareillage selon la revendication 5 caractérisé en ce que les chicanes des deux systèmes d'embarrage sont parallèles.

7. Appareillage selon l'une des revendications 5 ou 6 caractérisé en ce que le système d'embarrage possèdant au moins deux chicanes opposées est formé d'un bloc métallique traversé d'un canal en forme de serpentin sinusoïdal possédant au moins deux chicanes parallèles en opposition représentées par une crête haute et une crête basse de la sinusoïde.

8. Appareillage selon l'une des revendications 5 à 7 caractérisé en ce que le premier système d'embarrage dispose d'un moyen de chauffage.

**Patentansprüche**

1. Verfahren zur Herstellung von mit durchgehenden Fasern verstärkten Profilen aus thermoplastischem Kunstharz durch Umhüllen der durchgehenden Fasern der Vorgespinste mit thermoplastischem Kunstharz in einem Spritzwerkzeug zur Umhüllung mit einer Spannzone aus zumindest zwei entgegengesetzt gerichteten und zueinander parallelen Schikanen, die das Kunstharz zwingen, die Fasern zu durchtränken, dadurch **gekennzeichnet**, daß vor ihrer Umhüllung die Fasern der Vorgespinste durch Durchlaufen von zumindest einer Schikane einer ersten Spannzone in ein Vlies parallel ausgerichteter Fasern entfaltet werden.

2. Verfahren nach Anspruch 1, dadurch **gekennzeichnet**, daß die Schikanen der zwei Spannzonen parallel sind.

3. Verfahren nach Anspruch 1 oder 2, dadurch **gekennzeichnet**, daß die Schikanen im wesentlichen rechtwinklig zur Bewegungsrichtung der durchgehenden Fasern in der Vorrichtung angeordnet sind.

4. Verfahren nach einem der Ansprüche 1 bis 3, dadurch **gekennzeichnet**, daß die erste Spannzone beheizt ist.

5. Vorrichtung zum Herstellen von mit durchgehenden Fasern verstärkten Profilen aus thermoplastischem Kunstharz, umfassend im wesentlichen ein Spritzwerkzeug zur Umhüllung der durchgehenden Fasern und eine Formdüse, zwischen denen sich eine durch einen Kanal gebildete Spanneinrichtung befindet, die fluchtend zum Austritt des Spritzwerkzeuges zur Umhüllung angeordnet ist und zumindest zwei entgegengesetzt gerichtete und zueinander parallele und im wesentlichen zur Achse des Kanals rechtwinklige Schikanen aufweist, dadurch **gekennzeichnet**, daß sich vor dem Spritzwerkzeug zur Umhüllung eine erste, durch einen Kanal gebildete Spanneinrichtung mit zumindest einer, zur Achse des letzteren Kanals im wesentlichen rechtwinkligen Schikane befindet.

6. Vorrichtung nach Anspruch 5, dadurch **gekennzeichnet**, daß die Schikanen der beiden Spanneinrichtungen parallel sind.

7. Vorrichtung nach Anspruch 5 oder 6, dadurch **gekennzeichnet**, daß die zwindest zwei entgegengesetzt gerichtete Schikanen aufweisende Spanneinrichtung aus einem Metallblock gebildet ist, der von einem sinusschlangenförmigen Kanal mit zumindest zwei entgegengesetzten parallelen Schikanen, verkörpert durch einen oberen Kamm und einen unteren Kamm der Sinuskurve, durchzogen ist.

8. Vorrichtung nach einem der Ansprüche 5 bis 7, dadurch **gekennzeichnet**, daß die erste Spanneinrichtung eine Heizung aufweist.

**Claims**

1. Process for the manufacture of thermoplastic resin sections reinforced with continuous fibres by coating continuous roving fibres with thermoplastic resin in a coating die having a bar feed zone consisting of at least two chicanes which are opposed and parallel to each other forcing the resin to infiltrate between the fibres, characterised in that, before they are coated, the fibres of the rovings are spread out into a sheet of fibres which are aligned in parallel by passing through at least one chicane of a first bar feed zone.

2. Process according to Claim 1, characterised in that the chicanes of the two bar feed zones are parallel.

3. Process according to either of Claims 1 and 2, characterised in that the chicanes are substantially perpendicular to the axis of travel of the continuous fibres in the apparatus.

4. Process according to one of Claims 1 to 3, characterised in that the first bar feed zone is heated.

5. Apparatus permitting the manufacture of thermoplastic resin sections reinforced with continuous fibres, consisting essentially of a die for coating continuous fibres and a shaping die between which there is a bar feed system formed by a channel situated in line with the exit of the coating die, having at least two chicanes which are opposed and parallel to each other and substantially perpendicular to the axis of the said channel, characterised in that, before the coating die there is a first bar feed system consisting of a channel having at least one chicane substantially perpendicular to the axis of the latter channel.

6. Apparatus according to Claim 5, characterised in that the chicanes of the two bar feed systems are parallel.

7. Apparatus according to either of Claims 5 and 6, characterised in that the bar feed system having at least two chicanes which are opposed consists of a metal block through which there passes a channel in the form of a sinusoidal serpentine having at least two parallel chicanes in opposition which are represented by a high ridge and a low ridge of the sinusoid.

8. Apparatus according to one of Claims 5 to 7, characterised in that the first bar feed system is provided with a means of heating.

figure:1

EP 0 287 427 B1

## figure:2

## figure:3

figure:4